Europäisches Patentamt

**European Patent Office**

Office européen des brevets

(19)

(11) Veröffentlichungsnummer : **0 074 554**
**B1**

(12) **EUROPÄISCHE PATENTSCHRIFT**

(45) Veröffentlichungstag der Patentschrift :
04.03.87

(51) Int. Cl.⁴ : **B 64 D 1/02**

(21) Anmeldenummer : **82107962.1**

(22) Anmeldetag : **30.08.82**

(54) Verfahren und Vorrichtung zur Unterdrückung des Aussenlast-Tragflügel-Flatterns von Flugzeugen.

(30) Priorität : **12.09.81 DE 3136320**

(43) Veröffentlichungstag der Anmeldung :
**23.03.83 Patentblatt 83/12**

(45) Bekanntmachung des Hinweises auf die Patenterteilung : **04.03.87 Patentblatt 87/10**

(84) Benannte Vertragsstaaten :
**FR GB IT**

(56) Entgegenhaltungen :
**FR-A- 2 206 230**
**FR-A- 2 210 538**

(73) Patentinhaber : **Deutsche Forschungs- und Versuchsanstalt für Luft- und Raumfahrt e.V.**
**Linder Höhe Postfach 90 60 58**
**D-5000 Köln 90 (DE)**

(72) Erfinder : **Breitbach, Elmar, Dr. Ing.**
**Bonhoefferweg 6**
**D-3400 Göttingen (DE)**

(74) Vertreter : **Patentanwälte Dipl.-Ing. Rudolf Bibrach**
**Dipl.-Ing. Elmar Rehberg**
**Pütterweg 6 Postfach 738**
**D-3400 Göttingen (DE)**

EP 0 074 554 B1

## Beschreibung

Die Erfindung betrifft ein Verfahren zur Unterdrückung des Außenlast-Tragflügel-Flatterns von Flugzeugen, deren Tragflügel mit einer oder mehreren Außenlasten versehen ist, wobei die Außenlast am Tragflügel um eine rechtwinklig zur Symmetrieebene des Flugzeugs angeordnete Achse schwenkbar gelagert und die Außenlast über eine erste Feder mit dem Tragflügel derart verbunden wird, daß in der dem jeweiligen Flugzustand entsprechenden Gleichgewichtslage zwischen Tragflügel und Außenlast eine so niedrige Steifigkeit der Feder benutzt wird, daß die Nickfrequenz der Außenlast relativ zum Tragflügel wesentlich kleiner als die Torsionsfrequenz des Tragflügels ohne Außenlast ist.

Die Erfindung zeigt gleichzeitig eine Vorrichtung zur Unterdrückung des Außenlast-Tragflügel-Flatterns von Flugzeugen mit Tragflügel und einer oder mehreren Außenlasten, wobei die Außenlast am Tragflügel um eine rechtwinklig zur Symmetrieebene des Flugzeugs angeordnete Achse schwenkbar gelagert ist und zwischen Außenlast und Tragflügel eine erste Feder vorgesehen ist.

Jedes Flugzeug besitzt eine und nur eine Symmetrieebene, nämlich die Vertikalebene durch den Rumpf des Flugzeuges. In symmetrischer Anordnung zu dieser Ebene ist rechts und links je ein Tragflügel vorgesehen, der jeweils mit einer oder mehreren Außenlasten versehen sein kann. In der vorliegenden Anmeldung wird ein solcher Tragflügel mit einer Außenlast (oder mehreren Außenlasten) als wesentlicher Teil des Schwingungssystems hinsichtlich des Flatterns angesehen.

Flattern ist eine durch das Zusammenwirken strukturdynamischer und bewegungsinduzierter instationärer aerodynamischer Kräfte entstehende flugzeugtypische dynamische Instabilität ; die Stabilitätsgrenze zeigt sich als sog. kritische Fluggeschwindigkeit (auch Flattergeschwindigkeit). Oberhalb dieser Grenze nimmt die zwischen den Schwingungsbewegungen des Flugzeuges und den daraus resultierenden aerodynamischen Kräften generell vorhandene zeitliche Phasenverschiebung im Mittel einen Wert an, der zu einer aerodynamischen Entdämpfung und damit zu Energiezufuhr aus der umströmenden Luft in die schwingende Flugzeugstruktur führt. Dieser anfachende Vorgang führt in der Regel zum Verlust des Flugzeuges.

Aus diesem Grunde sind seit den Anfängen der Fliegerei erhebliche Anstrengungen unternommen worden, diesem gefährlichen Phänomen beizukommen. Die Gewährleistung der Flattersicherheit ist heute mehr denn je eine wesentliche Voraussetzung für den Erfolg einer Flugzeug-Neuentwicklung. Der derzeitige Stand der aeroelastischen Forschung bietet eine Vielzahl analytischer und experimenteller Methoden sowohl zur zuverlässigen Vorhersage der kritischen Geschwindigkeiten als auch zur Verbesserung des Flatterverhaltens. Letzteres kann sowohl mit Hilfe konstruktiver bzw. strukturseitiger Änderungen, wie z. B. durch Einführung von Massenausgleich oder durch Veränderung von Ruderanschluß-Steifigkeiten, als auch mittels sog. aktiver Flatterunterdrückungssysteme erreicht werden, an deren Entwicklung seit etwa 10 Jahren intensiv gearbeitet wird. Die letztgenannte Verfahrensweise benutzt gezielte Bewegungen von Steuerflächen zur Erzeugung zusätzlicher instationärer Luftkräfte, die zur Erhöhung der kritischen Geschwindigkeit führen. Die Steuerflächenbewegungen werden durch hydraulische Einrichtungen erzwungen, die ihrerseits in einem Regelkreis über geeignete Sensoren durch die Schwingungsbewegungen des Flugzeuges angesteuert werden.

Diese neue Technologie zielt bisher vor allem auf die Unterdrückung von Flügel-Außenlast-Flattern ab und damit auf die Beseitigung von Flugbereichsbeschränkungen, wie sie gerade für Außenlasten tragende Flugzeuge nahezu unvermeidbar sind.

Neben dieser relativ aufwendigen Methodik wurde in den vergangenen Jahren auch ein etwas einfacheres Verfahren untersucht, das ausschließlich auf die Unterdrückung von Flügel-Außenlast-Flattern anwendbar ist. In der Literatur Reed, W.H.III, Foughner, J.T., Jr., Runyan, H.L., Jr., Decoupler Pylon, A Simple, Effective, Wing/Store, Flutter Suppressor, Paper presented to the 20th Structures, Structural Dynamics and Materials Conference, St. Louis, Missouri, April 4-6, 1979, ist dieses Verfahren als « Decoupler Pylon » bekannt geworden.

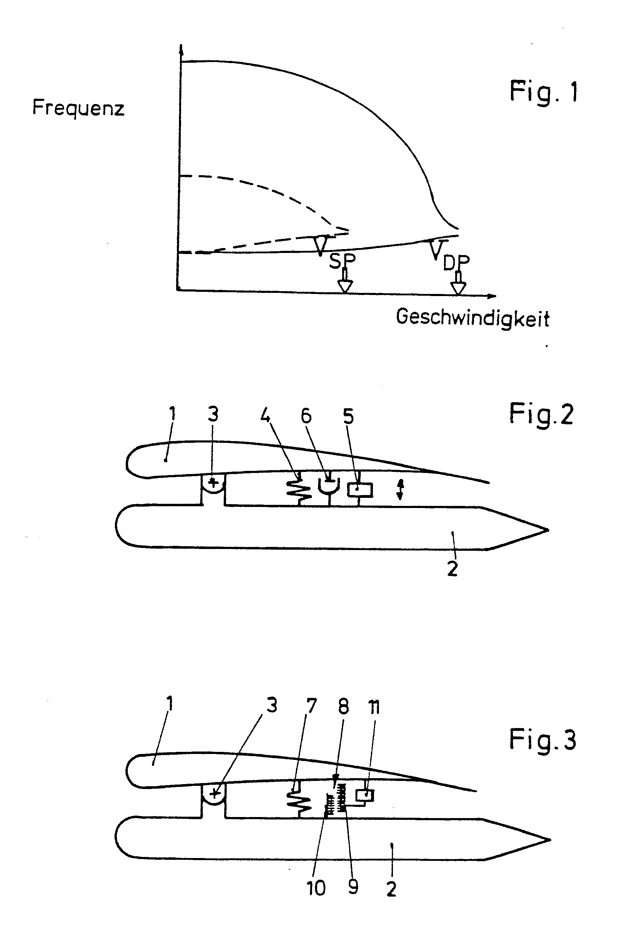

Die Grundidee des « Decoupler Pylon » basiert auf der Erfahrung, daß Flügel-Außenlast-Flatterfälle im wesentlichen durch die Interaktion zweier Flügel-Eigenschwingungsformen entstehen, deren eine überwiegend durch Flügelbiegung und deren andere überwiegend durch Flügeltorsion gekennzeichnet ist. Die zu diesen beiden Formen gehörenden Eigenfrequenzen, d. h. die höhere Torsionsfrequenz und die niedrige Biegefrequenz laufen — ausgehend von den entsprechenden ohne Strömung sich einstellenden Standschwingungsfrequenzen — als Funktion der instationären Luftkräfte bzw. der Fluggeschwindigkeit aufeinander zu, bevor sie sich im Flatterpunkt beinahe berühren. In Fig. 1 sind diese beiden Frequenzen über der Geschwindigkeit aufgetragen. Die unteren Linien stellen jeweils die Frequenzen der Flügelbiegung, die oberen Linien die Frequenzen der Flügeltorsion dar. Die gestrichelten Linien gelten für ein Flugzeug mit einer starr am Tragflügel befestigten Außenlast. Durch eine solche Außenlast wird generell bei höheren Geschwindigkeiten, also beim Auftreten von Flattern, die Torsionsfrequenz erheblich erniedrigt. Es ist ersichtlich, wie schon bei relativ kleiner Geschwindigkeit des Flugzeuges die Frequenzlinie für Torsion und Biegung sich einander nähern, so daß diese kritische Flugzeuggeschwindigkeit (Flattergeschwindigkeit) relativ niedrig liegt, so daß das Flugzeug nur unterhalb dieser Geschwindigkeitsgrenze geflogen werden kann. Die durchgezogenen Linien entsprechen dem « Decoupler Pylon », also einer schwenkbar am Tragflügel aufgehängten und geführten Außenlast. Gemäß dem Prinzip des « Decoupler Pylon » kann die Flattergeschwindigkeit VDP dadurch wesentlich erhöht werden, daß die Torsionseigenfrequenz gegenüber der Biegeeigenfrequenz wesentlich angehoben wird, so daß die oben geschilderte für die Flattergeschwindigkeit typische Annäherung der beiden Frequenzen erst bei höheren Fluggeschwindigkeiten geschieht. Gemäß dem Prinzip des « Decoupler Pylon » wird dieser Effekt dadurch erreicht, daß die Außenlast hinsichtlich ihrer Nickbewegung relativ zum Tragflügel weich aufgehängt wird, so daß die Außenlast gemäß dem seismischen Prinzip die Torsionsbewegungen nicht mitmacht, wenn die Nickfrequenz der Außenlast wesentlich niedriger als die Torsionsfrequenz des Tragflügels ist. Fig. 2 zeigt den « Decoupler Pylon » in schematischer Darstellung. Am Tragflügel 1 ist eine Außenlast 2 aufgehängt, und zwar schwenkbar um eine Achse 3, die senkrecht zur Symmetrieebene des Flugzeuges vorgesehen ist. Das System aus Tragflügel 1 und Außenlast 2 kann damit Nickbewegungen ausführen, ohne daß eine starre Kopplung zwischen den Teilen besteht. Tragflügel 1 und Außenlast 2 sind durch eine Feder 4 miteinander verbunden, die in Fig. 2 schematisch dargestellt ist. Diese Feder 4 kann z. B. eine mechanische Feder sein und sie ist vor allen Dingen relativ weich ausgebildet, bestizt also eine relativ kleine Steifigkeit, so daß die Nickbewegungen der Außenlast 2 zum Tragflügel 1 z. B. beim Fliegen von Manövern durch die Feder 4 kaum behindert werden. Parallelgeschaltet zu der Feder 4 ist eine hydraulische Einrichtung 5 vorgesehen, die einerseits am Tragflügel 1 und andererseits an der Außenlast 2 angreift. Diese hydraulische Einrichtung ist so ausgelegt und wird so gesteuert, daß die Relativlage zwischen Außenlast 2 und Tragflügel 1, die vor dem Fliegen eines Manövers vorhanden war, während bzw. nach Abschluß des Manövers wieder rückverstellt wird. Es handelt sich also um eine Einrichtung zur aktiven Regelung der Außenlast-Lagerückverstellung. Es versteht sich, daß hier erhebliche Kräfte aufzunehmen sind, so daß die hydraulische Einrichtung 5 sehr aufwendig ausgebildet sein muß. Weiterhin ist nachteilig, daß die Ausfallsicherheit eines solchen Systems aus einer Feder 4 und einer parallelgeschalteten hydraulischen Einrichtung nicht besonders groß ist. Fällt beispielsweise die hydraulische Einrichtung 5 aus, dann ist die relativ weiche Feder 4 nicht in der Lage, nennenswerte Kräfte aufzunehmen, so daß in diesem Fall bei entsprechender Geschwindigkeit mit einem Verlust des Flugzeuges zu rechnen ist. Parallel zu der Feder 4 und der hydraulischen Einrichtung 5 kann noch ein Dämpfer 6 vorgesehen sein.

Die Funktionsfähigkeit des « Decoupler Pylon » wurde bisher in Windkanalversuchen in relativ ruhiger Strömung nachgewiesen. Der Einsatz unter realen Flugbedingungen, d. h. unter der Einwirkung von Böen- und Manöverlasten, erfordert ein aktives Regelsystem zur Nachführung der Außenlasten an geänderte Fluglagen des Tragflügels, damit weder der aerodynamische Widerstand noch die flatterunterdrückende Wirksamkeit des « Decoupler Pylon » beeinträchtigt wird. Je nach Größe der Außenlasten können die dazu erforderlichen Stellkräfte beträchtlich sein. Entsprechend groß und aufwendig muß die dazu notwendige hydraulische Einrichtung 5 sein.

Hier setzt die vorliegende Erfindung ein, deren Aufgabe darin besteht, ein Verfahren und eine Vorrichtung der eingangs beschriebenen Art aufzuzeigen, die wirksamer und unter insgesamt geringerem Aufwand zur Unterdrückung von Außenlast-Tragflügel-Flattern geeignet sind.

Erfindungsgemäß wird dies bei dem Verfahren der eingangs beschriebenen Art dadurch erreicht, daß die an der Außenlast um die Achse bei Flugbewegungen einwirkenden stationären und quasistationären sowie dynamischen Momente durch ein Federsystem aus zwei Federn aufgenommen werden, wobei die erste Feder linear, steifer als die zweite Feder und nur geringe Federwege zulassend zur Aufnahme der stationären und quasistationären Momente (z. B. langwellige Böen, Manöver) ausgebildet ist, während die zweite Feder nichtlinear sowie mit negativer Steifigkeit und Nulldurchgang im Bereich der negativen Steifigkeit ausgebildet ist und der ersten Feder parallelgeschaltet wird, so daß zur Aufnahme der dynamischen Momente die geringe Steifigkeit des Federsystems in und um den durch den Nulldurchgang der nichtlinearen Feder und die stationären Momente definierten Arbeitspunkt ausgenutzt wird, und daß der Arbeitspunkt der nichtlinearen Feder in jeder Gleichgewichtslage zwischen Tragflügel und Außenlast dem Arbeitspunkt der linearen Feder nachgeführt wird. Die vorliegende Erfindung benutzt aus dem Stand der Technik nur den Gedanken, zur Entkupplung zwischen Außenlast-Nicken und Flügeltorsion zwischen Tragflügel und Außenlast eine Feder niedriger Steifigkeit zu benutzen, und zwar derart, daß die Nickfrequenz der Außenlast relativ zum Tragflügel wesentlich kleiner als die Torsionsfrequenz des Tragflügels ohne Außenlast ist. Ansonsten kehrt sich die vorliegende Erfindung völlig vom Stand der Technik ab. Im Stand der Technik wurde ja parallel zu der insgesamt weichen Feder eine aufwendige hydraulische Einrichtung zur Rückverstellung der Relativlage zwischen Flügel und Außenlast eingesetzt, wobei sich folgende Nachteile in Abhängigkeit der Schnelligkeit ergeben, mit der die Rückverstellung durch die hydraulische Einrichtung bei entsprechenden Auslenkungen erfolgt. Läßt man die hydraulische Einrichtung sehr schnell nach dem Beginn einer Auslenkung eingreifen, dann wird das System aus Tragflügel 1 und Außenlast 2 vergleichsweise wenig schwingungstechnisch entkuppelt, d. h.

sein Verhalten ist ähnlich einer festen Außenlastanordnung am Tragflügel. Läßt man dagegen die hydraulische Einrichtung langsamer arbeiten, greift also später nach dem Auftreten einer Auslenkung mit der Rückverstellung regelnd ein, dann läßt man beachtliche Auslenkungswege zwischen Außenlast und Tragflügel zu, die ja insgesamt wieder rückverstellt werden müssen, so daß der mechanische Aufwand der hydraulischen Einrichtung noch einmal vergrößert wird. Das erfindungsgemäße Verfahren ist nicht so sehr auf die Rückverstellung der relativen Lage gemäß den stationären Momenten zwischen Außenlast und Tragflügel gerichtet, wie dies beim Stand der Technik der Fall ist, sondern die schwingungstechnische Entkupplung des Systems aus Tragflügel und Außenlast steht mehr im Vordergrund. Grundlage ist durchaus der Gedanke, beim Fliegen eines Manövers, also der Bewegung des Tragflügels auf einer Kurvenbahn, die Außenlast gleichsam stationär geradlinig weiterfliegen zu lassen, was natürlich insofern nicht geht, als die Außenlast schwenkbar am Tragflügel aufgehängt ist. Aber die schwingungstechnische Entkupplung des Systems aus Außenlast und Tragflügel wird insofern wirksamer durchgeführt, als daß die lineare steife Feder die Kräfte aus den stationären und quasistationären Momenten aufnimmt, während die aus den dynamischen Momenten herrührenden Kräfte von dem Federsystem aus den beiden parallelgeschalteten Federn aufgenommen werden. Da dieses Federsystem durch die Parallelschaltung der beiden Federn mit der Summe der Federkennlinien arbeitet, ergibt sich infolge der negativen Steifigkeit und des Nulldurchgangs im Bereich der negativen Steifigkeit der nichtlinearen Feder insgesamt eine niedrige Steifigkeit des Federsystems im Arbeitspunkt. Dies bedeutet, daß die dynamischen Kräfte bzw. Momente ein Federsystem mit niedriger Steifigkeit vorfinden ; dies bedeutet nichts anderes, als daß das System aus Außenlast und Tragflügel hinsichtlich der dynamischen Kräfte wirksam entkoppelt ist, so daß sich damit letztendlich eine beachtliche Erhöhung der kritischen Fluggeschwindigkeit erzielen läßt. Bei dem erfindungsgemäßen Verfahren wird auch nicht eigentlich eine Rückverstellung der relativen Lage zwischen Außenlast und Tragflügel angestrebt, obwohl selbstverständlich auch eine solche Rückverstellung letztlich erreicht werden muß. Es steht aber vielmehr der Gedanke im Vordergrund, Verschwenkungen, also Bewegungen zwischen Außenlast und Tragflügel durchaus zuzulassen und im Gegenteil immer dafür zu sorgen, daß der Arbeitspunkt der nichtlinearen Feder in jeder Gleichgewichtslage zwischen Tragflügel und Außenlast nachgeführt wird. Die hydraulische Einrichtung ist also mehr auf ein Nachgeben abgestellt, denn auf eine Rückführung. Da bei dieser Nachführung nur eine sehr geringe Masse, nämlich die Masse eines Teils der nichtlinearen Feder bewegt werden muß, erniedrigt sich der Aufwand für die Nachführeinrichtung im Vergleich zum Stand der Technik ganz erheblich.

Der Arbeitspunkt der nichtlinearen Feder wird in jeder Gleichgewichtslage entsprechend der Auslenkung der linearen Feder nachgeführt. Während der Flugbewegungen ergeben sich verschiedene Gleichgewichtslagen, je nachdem, ob beispielsweise ein Geradeausflug vorliegt oder eine Manöverbewegung erfolgt.

Es findet eine nichtlineare Feder mit dem Betrage nach geringfügig kleinerer Steifigkeit als die positive Steifigkeit der linearen Feder innerhalb des Federsystems aus zwei parallelgeschalteten Federn Verwendung. Je nach den Beträgen der Steifigkeiten der beiden Federn läßt sich damit im Arbeitspunkt jede gewünschte Weichheit des Federsystems erzielen. Schließlich ist aber noch wichtig, daß die nichtlineare Feder eine solche mit negativer Steifheit und mit Nulldurchgang im Bereich der negativen Steifheit ist. Dies bedeutet, daß die nichtlineare Feder — für sich allein betrachtet — ein labiles Gleichgewicht schafft, bei dem die zur Rückverstellung in die labile Lage erforderlichen Rückstellkräfte bei kleinen Auslenkungen sehr klein sind, so daß die Nachführeinrichtung entsprechend klein ausgebildet sein kann. Die Nachführeinrichtung muß also lediglich in der Lage sein, relativ schnell anzusprechen ; anders gesagt, die Nachführeinrichtung muß schneller geregelt werden als es der Durchführung eines Manövers entspricht, damit der Arbeitspunkt der nichtlinearen Feder bezüglich des Federsystems aus den beiden parallelgeschalteten Federn und damit die geringe Steifheit des Federsystems während des Manövers für die dynamischen Kräfte zur Verfügung steht.

Die Vorrichtung zur Durchführung des Verfahrens kennzeichnet sich erfindungsgemäß dadurch, daß die erste Feder linear, steifer als eine zweite Feder und nur geringe Federwege zulassend ausgebildet ist und dieser ersten Feder die zweite nichtlineare Feder mit negativer Steifigkeit und Nulldurchgang im Bereich der negativen Steifigkeit parallelgeschaltet ist, und daß eine Einrichtung zum Nachführen des durch den Nulldurchgang der nichtlinearen Feder definierten Arbeitspunktes entsprechend der Auslenkung der linearen Feder vorgesehen ist. Weitere Einzelheiten und vorteilhafte Ausgestaltungen der Vorrichtung sind in den Unteransprüchen festgelegt.

Man kann die vorliegende Erfindung auch wie folgt beschreiben : Die statischen Lasten (Kräfte, Momente) werden erfindungsgemäß durch eine steife lineare Feder aufgenommen. Dieser linearen Feder ist eine nichtlineare Feder in Form einer Magnetfeder mit negativer Steifigkeit und Nulldurchgang im Bereich der negativen Steifigkeit parallelgeschaltet. Damit ergibt sich ein Federsystem aus den beiden Federn, welches eine nichtlineare Steifigkeit mit niedriger Steifigkeit im jeweiligen Arbeitspunkt und relativ großer Steifigkeit außerhalb des Arbeitspunktes aufweist. Zudem liegt der Arbeitspunkt nicht fest, d. h. das Federsystem besitzt eine variable Steifigkeit, die durch Nachführen in ihrer Variabilität aber so gesteuert wird, daß gerade und nur im Arbeitspunkt eine niedrige Steifigkeit des Federsystems resultiert. Diese niedrige Steifigkeit wirkt den dynamischen Lasten (Kräfte, Momente) wunschgemäß nur geringfügig entgegen, so daß vorteilhaft die gewünschte schwingungstechnische Entkupplung des Systems aus Außenlast und Tragflügel für die dynamischen Lasten erreicht wird. Die Arbeitspunktverschiebungen infolge von Manöverlast nehmen insgesamt vergleichbar kleinere Wege gegenüber dem Stand der Technik ein, weil die lineare Feder mit ihrer beachtlichen Steifheit bei der Summenwirkung des Federsystems immer mit berücksichtigt wird bzw. mit eingeht. Die zu verschiebenden Massen, die von der Nachführung gehandhabt werden müssen, sind aber im Größenordnungen kleiner, weil nicht mehr die Masse der Außenlast, sondern lediglich noch die Masse eines Teils der nichtlinearen Feder nachgeführt werden muß. Es ergeben sich also extrem kleine Stellkräfte im nichtlinearen Teil, die gleichzeitig die Gesamtstellkräfte darstellen, die von der hydraulischen Einrichtung bewältigt werden müssen. Da die hydraulische Einrichtung sehr einfach und klein ausgebildet sein kann, findet gleichzeitig vorteilhaft eine Gewichtsreduzierung der mechanischen Einrichtung statt. Der Platzbedarf dieser Einrichtung ist vernachlässigbar. Der technische Aufwand ist sehr gering. Die Ausfallsicherheit ist wesentlich größer als beim Stand der Technik. Fällt nämlich die hydraulische Einrichtung aus, dann ist immer noch die lineare Feder mit ihrer vergleichsweise großen Steifigkeit wirksam, so daß sich nur wegmäßig gesehen relativ kleine Verschiebungen ergeben können. Flugzustände unter Ausfall der hydraulischen Einrichtung sind im Gegensatz zum Stand der Technik damit durchaus beherrschbar, wenn auch mit erheblicher Geschwindigkeitsreduzierung unter die Flattergeschwindigkeit VSP.

Weitere Vorteile der Erfindung lassen sich wie folgt zusammenfassen :

1. Extrem geringe Stellkräfte bei der Anpassung an veränderliche Lasten infolge von Manövern oder Böen.

2. Geringe Masse und Raumbedarf.

3. Niedrige Herstellungskosten.

4. Einfache Integration in das Gesamtsystem.

5. Hohe Zuverlässigkeit, da keine ermüdungsgefährdeten Teile im nichtlinearen Teil des Federsystems.

6. Einfache Möglichkeiten zur Erzielung von Redunanz im Stellkraftteil der automatischen Lastanpassung.

Die Erfindung wird anhand der Zeichnungen weiter verdeutlicht und beschrieben. Es zeigen :

Figur 1 ein Diagramm der Frequenzen über der Geschwindigkeit (Stand der Technik),

Figur 2 den schematischen Aufbau des « Decoupler Pylon » (Stand der Technik),

Figur 3 den schematischen erfindungsgemäßen Aufbau des Schwingungssystems aus Tragflügel und Außenlast,

Figur 4 die Verdeutlichung einer konstruktiven Ausführung und Anordnung der nichtlinearen Magnetfeder,

Figur 5 eine andere Ausbildungsmöglichkeit der Magnetfeder,

Figur 6 eine Draufsicht auf die nichtlineare Magnetfeder gemäß Fig. 5,

Figur 7 die Kennlinie der nichtlinearen Magnetfeder,

Figur 8 ein Diagramm der Kennlinien der beiden Federn und des Federsystems über dem Winkel der Schwenkbewegung und

Figur 9 einen Vergleich der Kennlinien des nichtlinearen Federsystems mit einer linearen Feder gleicher Steifigkeit im Arbeitspunkt.

Fig. 3 zeigt in schematischer Darstellung die Erfindung. Am Tragflügel 1 ist auch hier um die Achse 3 schwenkbar die Außenlast 2 aufgehängt. Die Achse 3 erstreckt sich senkrecht zu der Symmetrieachse des Flugzeuges. Tragflügel 1 und Außenlast 2 sind über eine lineare Feder 7 mit relativ großer Steifigkeit verbunden. Die Feder 7 kann selbstverständlich auch als Drehfeder um die Achse 3 ausgebildet und angeordnet sein. Außerdem ist der Tragflügel 1 und die Außenlast 2 über eine weitere Feder 8 miteinander verbunden. Die Federn 7 und 8 sind in Parallelschaltung zueinander angeordnet und bilden zusammen ein Federsystem 7, 8. Die Feder 8 besteht aus den beiden Teilen 9 und 10, wobei der Teil 9 auf den Tragflügel 1 und der Teil 10 auf der Außenlast 2 vorgesehen bzw. mit diesem verbunden ist. Es besteht somit eine berührungslose Verbindung zwischen Tragflügel 1 und Außenlast 2 über die nichtlineare Feder 8. Die Feder 7 kann z. B. eine mechanische oder pneumatische Feder sein oder aus mehreren derartigen Federn bestehen. Die andere Feder 8 kann eine Magnetfeder sein, d. h. aus verschiedenen Magnetanordnungen zusammengesetzt sein, wie dies später noch erläutert wird. Wesentlich ist, daß die Feder 8 eine negative Steifigkeit und einen Nulldurchgang im Bereich der negativen Steifigkeit aufweist. Es ist eine Einrichtung 11 zum Nachführen der Feder 8 innerhalb des Federsystems 7, 8 vorgesehen, die beispielsweise auf dem Tragflügel 1 angeordnet ist und somit mit dem Teil 9 in Verbindung steht. Die Einrichtung 11 stützt sich auf dem Tragflügel 1 ab und verschiebt den Teil 9 der Feder 8 relativ zu dem Teil 10 der Feder 8. Es versteht sich, daß die Einrichtung 11 auch auf der Außenlast 2 bzw. mit dieser in Verbindung stehend vorgesehen sein könnte. Wichtig ist es, zu erkennen, daß sich die Einrichtung 11 nicht etwa wie die hydraulische Einrichtung 5 des Standes der Technik (Fig. 2) zwischen Tragflügel 1 und Außenlast 2 abstützt, so daß die Einrichtung 11 schon grundsätzlich mit der Einrichtung 5 nicht vergleichbar ist, obwohl beide Einrichtungen beispielsweise aus einer hydraulischen Verstellanlage bestehen können, die aber in Aufwand, Ausbildung und Wirkungsweise erhebliche Unterschiede aufweisen.

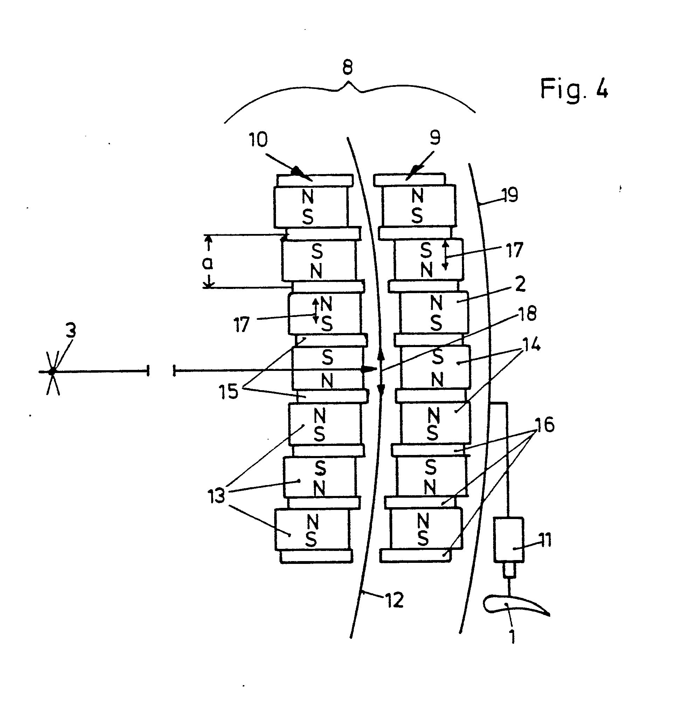

Fig. 4 zeigt eine Ausbildungsmöglichkeit für die weitere Feder 8 als Magnetfeder. Durch einen Strich 12 ist der Spalt zwischen den Teilen 9 und 10 angedeutet. Der Teil 9 sei an der Außenlast 2 befestigt, so daß diese um die Achse 3 verschwenken kann, während der Teil 10 mit dem Tragflügel 1 verbunden ist. Auch die umgekehrte Anordnung ist selbstverständlich möglich. Die beiden Teile 9 und 10 der Feder 8 bestehen aus einer Vielzahl von nebeneinander angeordneten Stabmagneten 13 und 14, die jeweils durch Weicheisenzwischenstücke 15 bzw. 16 voneinander getrennt sind. Die Stabmagnete 13 und 14 können als Permanentmagnete ausgebildet sein, wobei die Magnetisierungsachsen 17 der Stabmagnete 13 und 14 parallel zur Bewegungsrichtung gemäß Pfeil 18 angeordnet sind. Die Nord- und Südpole der Stabmagnete 13, 14 sind so angeordnet, daß je zwei benachbarte Stabmagnete 13 bzw. 14 je eines Teils der Feder 8, z. B. des Teiles 9, einander zugekehrt an das Weicheisenzwischenstück 15 bzw. 16 angrenzen. Die Magnetlinien der Stabmagnete 13 bzw. 14 werden in den Weicheisenzwischenstücken 15 bzw. 16 gebündelt, so daß hier eine U-förmige Anordnung der Magnetlinien resultiert. Sofern gemäß Fig. 4 die Anordnung so getroffen ist wie in Fig. 3, ist der Teil 9 der Feder 8 beispielsweise auf einem Rahmen 19 gelagert, der gegenüber dem Tragflügel 1 mit Hilfe der Einrichtung 11 verschoben werden kann. Die Einrichtung 11 kann als kleiner Schrittmotor oder als kleine hydraulische Anlage ausgebildet sein. Die Einrichtung 11 muß ja nicht mehr die Masse der Außenlast 2, sondern lediglich noch die Masse des Teiles 9 der Feder 8 verschieben bzw. nachführen.

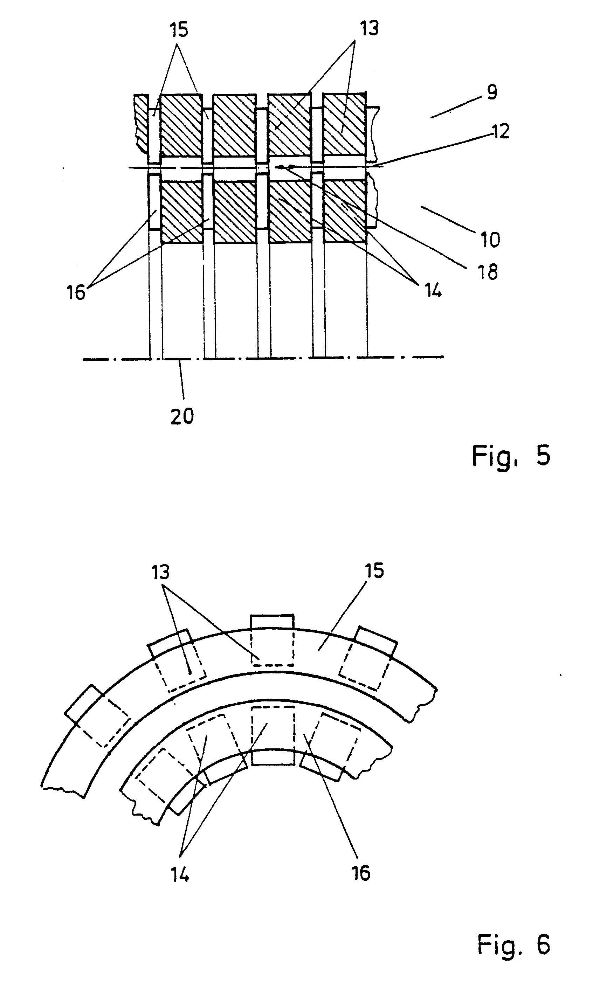

Fig. 5 zeigt eine weitere Ausbildungsmöglichkeit der nichtlinearen Feder 8, die auch hier als Magnetfeder ausgebildet ist. Die Weicheisenzwischenstücke 15 und 16 sind hier als Ringe ausgebildet, die konzentrisch zu der gemeinsamen Symmetrieachse 20 angeordnet sind. Fig. 6 zeigt eine Draufsicht auf eine solche Anordnung und läßt auch erkennen, daß die ringförmige Anordnung der Magnete beispielsweise durch einzelne auf die Weicheisenscheiben 15 bzw. 16 aufgeklebte Stabmagnete 13 und 14 realisiert sein kann. Derartige Stabmagnete haben vor allem in den letzten Jahren an Aktualität gewonnen, weil insbesondere bei der Entwicklung stärkerer Permanentmagnete erhebliche Fortschritte erzielt werden konnten. Dies führt vor allem hinsichtlich Gewicht und Raumbedarf zu weiteren Einsparungen. Der Pfeil 18 gibt auch hier die Bewegungsrichtung an, in der die Relativbewegung zwischen den Teilen 9 und 10 der Feder 8 stattfindet. Man sieht, daß die Bewegungsrichtung gemäß Pfeil 18 parallel zur Symmetrieachse 20 erfolgt.

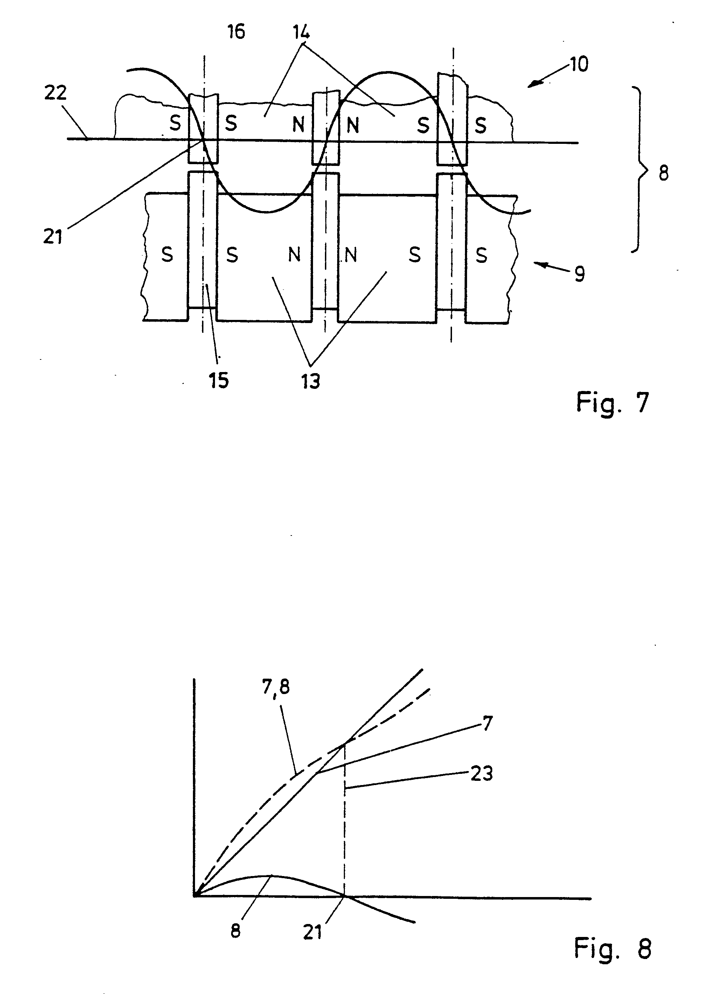

Fig. 7 zeigt die Kennlinie der Magnetfeder 8 bzw. der beiden Teile 9 und 10 zueinander. Die Feder 8 besitzt einen Arbeitspunkt 21, in dem negative Steifigkeit vorliegt, d. h. die Kennlinie besitzt eine negative Steigung. Außerdem ist im Bereich dieser negativen Steigung der Nulldurchgang vorgesehen, erfolgt also ein Schnittpunkt mit der Nullachse 22. Die Anordnung der Magnetfelder 8 entspricht dabei der Anordnung der Fig. 4. Es ist ersichtlich, wie die beiden Teile 9 und 10 der Feder 8 in einem labilen Gleichgewicht zueinander stehen. Erfolgt eine geringfügige Auslenkung aus dieser labilen Gleichgewichtslage, so ist zu erwarten — ohne Eingriff in das System — daß die labile Lage nicht mehr erreicht wird.

Fig. 8 zeigt die Kennlinien der Federn 7 und 8. Die Kennlinie, also die Steifigkeit der Feder 7 ist positiv und linear. Sie steigt relativ steil an, so daß eine relativ steife Feder 7 vorliegt. Die Kennlinie der Feder 8 ist die Kennlinie, wie sie anhand von Fig. 7 bereits erläutert wurde. Durch Addition der Kennlinien ergibt sich die gestrichelte Kennlinie, die für das Federsystem 7, 8 aus der Parallelschaltung der beiden Federn 7 und 8 entsteht. Der Arbeitspunkt 21 der Feder 8 bewegt sich dabei auf der senkrechten Linie 23 nach oben. Man sieht, daß die resultierende Federkennlinie des Federsystems 7, 8 im Arbeitspunkt eine sehr kleine Steigung aufweist, also das Federsystem 7, 8 relativ niedrige Steifheit besitzt, wie es zur schwingungstechnischen Entkopplung bezüglich der dynamischen Lasten erforderlich ist.

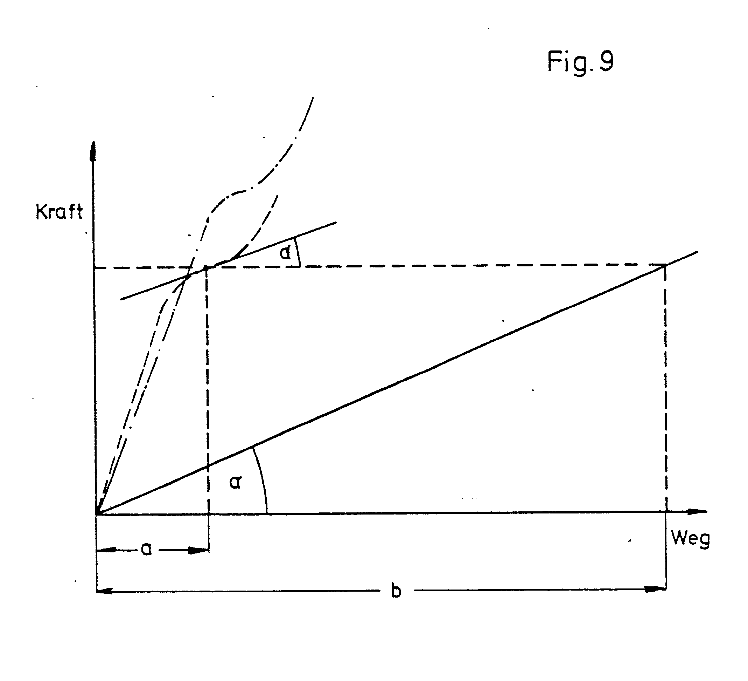

Fig. 9 zeigt den Vergleich der relativ weichen Feder 4 aus dem Stand der Technik zu der erfindungsgemäßen Federkombination. Dabei sind Kräfte über Wegen aufgetragen. Die durchgezogene Linie als Gerade im Winkel alpha ist die Federkennlinie der Feder 4 des Standes der Technik einer bestimmten Kraft entspricht die statische Auslenkung b der linearen Feder 4 im Arbeitspunkt, die einen relativ großen Weg darstellt. Zum Vergleich bei gleicher Kraft ist die Kennlinie der Federkombination 7, 8 des Anmeldungsgegenstandes in gestrichelter Linie wiedergegeben, und zwar für gleiche Steifigkeit im Arbeitspunkt (gleicher Winkel alpha). Die statische Auslenkung a dieses nichtlinearen Federsystems 7, 8 im Arbeitspunkt ist wesentlich kleiner, so daß auch hieraus schon ersichtlich wird, daß nach der Erfindung geringere Verschiebungen zwischen Außenlast 2 und Tragflügel 1 auftreten als beim Stand der Technik. Bei einer auftretenden Auslenkung wird lediglich der Arbeitspunkt 21 in Richtung der Abszisse, also des Weges um den erforderlichen Betrag verschoben, so daß der Arbeitspunkt dann bei kleiner Verschiebung schon eine ganz andere Höhenlage einnimmt, so daß Lasten anderer Beträge aufgenommen werden können. Zur Verschiebung des Arbeitspunktes ist lediglich das Nachführen eines Teiles 9 oder 10 der nichtlinearen Feder 8 erforderlich. Eine solche verschobene Kennlinie ist strichpunktiert dargestellt.

Bezugszeichenliste :

1 = Tragflügel
2 = Außenlast
3 = Achse
4 = Feder
5 = hydraulische Einrichtung
6 = Dämpfer
7 = Feder
8 = weitere Feder
9 = Teil

10 = Teil
11 = Einrichtung zum Nachführen
12 = Strich
13 = Stabmagnet
14 = Stabmagnet
15 = Weicheisenzwischenstück
16 = Weicheisenzwischenstück
17 = Magnetisierungsachse
18 = Pfeil
19 = Rahmen
20 = Symmetrieachse
21 = Arbeitspunkt
22 = Nullachse
23 = Linie

**Patentansprüche**

1. Verfahren zur Unterdrückung des Außenlast-Tragflügel-Flatterns von Flugzeugen, deren Tragflügel mit einer oder mehreren Außenlasten versehen ist, wobei die Außenlast am Tragflügel um eine rechtwinklig zur Symmetrieebene des Flugzeuges angeordnete Achse schwenkbar gelagert und die Außenlast über eine Feder mit dem Tragflügel derart verbunden wird, daß in der dem jeweiligen Flugzustand entsprechenden Gleichgewichtslage zwischen Tragflügel und Außenlast eine so niedrige Steifigkeit der Feder benutzt wird, daß die Nickfrequenz der Außenlast relativ zum Tragflügel wesentlich kleiner als die Torsionsfrequenz des Tragflügels ohne Außenlast ist, dadurch gekennzeichnet, daß die an der Außenlast (2) um die Achse (3) bei Flugbewegungen einwirkenden stationären und quasi stationären sowie dynamischen Momente durch ein Federsystem (7, 8) aus zwei Federn aufgenommen werden, wobei die erste Feder (7) linear, steifer als die zweite Feder (8) und nur geringe Federwege zulassend zur Aufnahme der stationären und quasi stationären Momente ausgebildet ist, während die zweite Feder (8) nichtlinear sowie mit negativer Steifigkeit und Nulldurchgang im Bereich der negativen Steifigkeit ausgebildet ist und der ersten Feder (7) parallelgeschaltet wird, so daß zur Aufnahme der dynamischen Momente die geringe Steifigkeit des Federsystems (7, 8) in und um den durch den Nulldurchgang der nichtlinearen Feder (8) und die stationären Momente definierten Arbeitspunkt (21) ausgenutzt wird, und daß der Arbeitspunkt (21) der nichtlinearen Feder (8) in jeder Gleichgewichtslage zwischen Tragflügel (1) und Außenlast (2) dem Arbeitspunkt der linearen Feder nachgeführt wird.

2. Verfahren nach Anspruch 1, dadurch gekennzeichnet, daß der Arbeitspunkt (21) der nichtlinearen Feder (8) in jeder Gleichgewichtslage entsprechend der Auslenkung der linearen Feder (7) nachgeführt wird.

3. Verfahren nach Anspruch 1, dadurch gekennzeichnet, daß eine nichtlineare Feder (8) mit dem Betrag nach geringfügig kleinerer Steifigkeit als die positive Steifigkeit der linearen Feder (7) innerhalb des Federsystems (7, 8) aus den zwei parallelgeschalteten Federn Verwendung findet.

4. Vorrichtung zur Unterdrückung des Außenlast-Tragflügel-Flatterns von Flugzeugen mit Tragflügel (1) und einer oder mehreren Außenlasten (2), wobei die Außenlast am Tragflügel um eine rechtwinklig zur Symmetrieebene des Flugzeugs angeordnete Achse (3) schwenkbar gelagert ist und zwischen Außenlast und Tragflügel eine erste Feder (4) vorgesehen ist, dadurch gekennzeichnet, daß die erste Feder (7) linear, steifer als eine zweite Feder (8) und nur geringe Federwege zulassend ausgebildet ist und dieser ersten Feder (7) die zweite nichtlineare Feder (8) mit negativer Steifigkeit und Nulldurchgang im Bereich der negativen Steifigkeit parallelgeschaltet ist, und daß eine Einrichtung (11) zum Nachführen des durch den Nulldurchgang der nichtlinearen Feder (8) definierten Arbeitspunkts (21) entsprechend der Auslenkung der linearen Feder (7) vorgesehen ist.

5. Vorrichtung nach Anspruch 4, dadurch gekennzeichnet, daß als nichtlineare Feder (8) eine Magnetfeder vorgesehen ist, deren einer Teil (9) mit dem Tragflügel (1) und deren anderer Teil (10) mit der Außenlast (2) verbunden ist, wobei die Teile (9, 10) im labilen Gleichgewicht zueinander angeordnet sind und die Einrichtung (11) zum Nachführen bzw. Wiederherstellung der labilen Gleichgewichtslage dient.

6. Vorrichtung nach Anspruch 4 und 5, dadurch gekennzeichnet, daß die beiden Teile (9, 10) der Magnetfeder jeweils aus mehreren in Bewegungsrichtung hintereinandergeschalteten Stabmagneten (13 bzw. 14) bestehen, die durch Weicheisenzwischenstücke (15 bzw. 16) voneinander getrennt sind, wobei die Magnetisierungsachsen (17) der Stabmagnete (13 bzw. 14) parallel zur Bewegungsrichtung und ihre Pole so angeordnet sind, daß jeweils zwei aufeinanderfolgende Stabmagnete (13, 13 bzw. 14, 14) mit den gleichnamigen Polen einander zugekehrt an das Weicheisenzwischenstück (15 bzw. 16) angrenzen.

7. Vorrichtung nach Anspruch 4, dadurch gekennzeichnet, daß der Betrag der negativen Steifigkeit der nichtlinearen Feder (8) geringfügig kleiner als der Betrag der positiven Steifigkeit der linearen Feder (7) ist.

8. Vorrichtung nach Anspruch 4 und 5, dadurch gekennzeichnet, daß die Einrichtung (11) zum Nachführen aus einem Schrittmotor oder einer hydraulischen Anlage besteht, die mit dem Tragflügel (1) verbunden ist, den mit dem Tragflügel verbundenen Teil (9) der Magnetfeder nachgeführt und sich am Tragflügel (1) abstützt.

9. Vorrichtung nach Anspruch 6, dadurch gekennzeichnet, daß die Stabmagneten (13 bzw. 14) und die Weicheisenzwischenstücke (15 bzw. 16) in einem Verhältnis ihrer Dicken zueinander von etwa 3 : 1 vorgesehen sind.

10. Vorrichtung nach Anspruch 4 und 5, dadurch gekennzeichnet, daß die beiden Teile (9, 10) der Magnetfeder mit den Stabmagneten (13 bzw. 14) und den Weicheisenzwischenstücken (15 bzw. 16) jeweils in konzentrischer Ringanordnung vorgesehen und die konzentrische Symmetrieachse (20) in Bewegungsrichtung angeordnet ist.

## Claims

1. Process for suppressing aircraft wing flutter associated with the presence of one or more external loads, each being carried by the wing in a manner such that it can rotate about an axis that is located at right-angles to the plane of symmetry of the aircraft, and being connected to the wing *via* a spring, in a manner such that in the equilibrium position between the wing and the external load, corresponding to the flight condition prevailing at any particular instant, use is made of a spring stiffness that is low enough to ensure that the pitch frequency of the external load, relative to the wing, is significantly lower than the torsional frequency of the wing when without an external load, characterized in that a spring system (7, 8), comprising two springs, is utilized not only to absorb the steady-state and quasi-steady-state moments which act on the external load (2), about the axis (3), during flight movements, but also to absorb the dynamic moments, the first spring (7) being designed to be linear, to be stiffer than the second spring (8), and to allow only small deflections for the purpose of absorbing the steady-state and quasi-steady-state moments, while the second spring (8) is designed both to be non-linear and to exhibit negative stiffness and a null crossover point within the negative stiffness range, and is connected in parallel with the first spring (7), so that, in order to absorb the dynamic moments, advantage is taken of the low stiffness of the spring system (7, 8) at and around the operating point (21) that is defined by the null crossover point of the non-linear spring (8) and the steady-state moments, and in that the operating point (21) of the non-linear spring (8) is subject to follow-up adjustment to the operating point of the linear spring, in every equilibrium position between the wing (1) and the external load (2).

2. Process according to Claim 1, characterized in that the operating point (21) of the non-linear spring (8) is subject to follow-up adjustment in every equilibrium position corresponding to the deflection of the linear spring (7).

3. Process according to Claim 1, characterized in that a non-linear spring (8) is used within the spring system (7, 8) comprising the two parallel-connected springs, this non-linear spring (8) exhibiting a stiffness which in terms of magnitude is slightly smaller than the positive stiffness of the linear spring (7).

4. Apparatus for suppressing aircraft wing flutter associated with the presence of one or more external loads (2), each being carried by the wing (1) in a manner such that it can rotate about an axis (3) that is located at right-angles to the plane of symmetry of the aircraft, a first spring (7) being provided between the external load and the wing, characterized in that the first spring (7) is designed to be linear, to be stiffer than a second spring (8), and to allow only small deflections, while the second spring (8) is non-linear, exhibits both negative stiffness and a null crossover point within the negative stiffness range, and is connected in parallel with the first spring (7), and in that the operating point (21), as defined by the null crossover point of the non-linear spring (8), is subject to follow-up adjustments which correspond with the deflection of the linear spring (7), a suitable device (11) being provided in order to effect these adjustments.

5. Apparatus according to Claim 4, characterized in that a magnetic spring is provided in order to serve as the non-linear spring (8), one portion (9) of this magnetic spring being connected to the wing (1) and its other portion (10) being connected to the external load (2), these portions (9, 10) being arranged in a manner such that they are in unstable equilibrium with respect to one another, while the device (11) serves to apply follow-up adjustments to the unstable equilibrium position or, rather, to regain this unstable equilibrium position.

6. Apparatus according to Claims 4 and 5, characterized in that each of the two portions (9, 10) of the magnetic spring is composed of a plurality of bar magnets (13 and 14 respectively) which are separated, one from the next, by soft iron spacers (15 and 16 respectively), the axes (17) of magnetization of the bar magnets (13 and 14) being parallel to the direction of movement, and their poles being arranged in a manner such that, in each case, the like poles of two successive bar magnets (13, 13 or 14, 14) adjoin the soft iron spacer (15 or 16), these like poles facing one another.

7. Apparatus according to Claim 4, characterized in that the magnitude of the negative stiffness of the non-linear spring (8) is slightly smaller than the magnitude of the positive stiffness of the linear spring (7).

8. Apparatus according to Claims 4 and 5, characterized in that the follow-up adjustment device (11) consists of either a stepping motor or a hydraulic system, and is connected to the wing (1), which supports it, this device (11) applying follow-up adjustments to that portion (9) of the magnetic spring which is attached to the wing (1).

9. Apparatus according to Claim 6, characterized in that the bar magnets (13, 14) are designed to have a thickness which exceeds that of the soft iron spacers (15 and 16 respectively) by a factor of approximately 3.

10. Apparatus according to Claims 4 and 5, characterized in that both portions (9, 10) of the magnetic spring, comprising the bar magnets (13 and 14 respectively) and the soft iron spacers (15 and 16 respectively), are designed in a manner such that they form a concentric annular arrangement, the axis (20) of concentric symmetry being aligned with the direction of movement.

## Revendications

1. Procédé pour réduire le flottement aile porteuse-charge extérieure d'avions, dont l'aile porteuse est munie d'une ou plusieurs charges extérieures, ladite charge extérieure pouvant pivoter sur l'aile porteuse autour d'un axe disposé à angle droit par rapport au plan de symétrie de l'avion et étant reliée à l'aile porteuse par un premier ressort de telle sorte que dans la situation d'équilibre correspondant à chaque condition de vol, on utilise une dureté de ressort assez faible pour que la fréquence d'inclinaison de la charge extérieure par rapport à l'aile porteuse soit nettement plus faible que la fréquence de torsion de l'aile porteuse sans charge extérieure, caractérisé par le fait que les couples stationnaires ou quasi-stationnaires, ainsi que les couples dynamiques, qui s'exercent sur la charge extérieure (2) autour de l'axe (3) au cours des mouvements de vol, sont pris en charge par un système élastique (7, 8) composé de deux ressorts, le premier ressort (7) étant linéaire, plus dur que le second ressort (8) et n'autorisant que de faibles courses lors de la prise en charge des couples stationnaires ou quasi-stationnaires, tandis que le second ressort (8) est non linéaire, à dureté négative et passage à zéro dans la zone de dureté négative et est monté en parallèle avec le premier ressort (7), si bien que pour la prise en charge des couples dynamiques, on utilise la faible dureté du système élastique (7, 8) au point de travail (21), et autour de ce dernier, ce point de travail étant défini par le passage à zéro du ressort (8) non linéaire et par les couples stationnaires, et en ce que le point de travail (21) du ressort non linéaire (8) est ramené, dans chaque situation d'équilibre, entre l'aide porteuse (1) et la charge extérieure (2).

2. Procédé selon la revendication 1, caractérisé par le fait que le point de travail (21) du ressort (8) non linéaire est déplacé dans chaque situation d'équilibre en fonction de l'écart provoqué sur le ressort linéaire.

3. Procédé selon la revendication 1, caractérisé par le fait qu'on utilise un ressort (8) non linéaire dont la valeur de dureté est à peine plus faible que la dureté positive du ressort (7) linéaire, à l'intérieur du système élastique (7, 8) constitué par les deux ressorts montés en parallèle.

4. Dispositif pour contenir le flottement aile-porteuse-charge extérieure d'avions muni d'une aile porteuse et d'une ou plusieurs charges (2) extérieures, la charge extérieure étant fixée à l'aile porteuse de façon pivotante autour d'un axe disposé à angle droit par rapport au plan de symétrie de l'avion et un premier ressort (4) étant prévu, entre la charge extérieure et l'aile porteuse, caractérisé par le fait que le premier ressort (7) est d'un type non linéaire, plus dur que le second ressort (8) et n'autorisant que de faibles courses de ressort, et qu'à côté de ce premier ressort (7), un second ressort (8) à dureté négative et passage à zéro dans la zone de dureté négative, est monté en parallèle, et en ce qu'un dispositif (11) est prévu pour ramener le point de travail (21) défini par le passage à zéro du ressort non linéaire (8), en correspondance avec l'écart provoqué du ressort linéaire (7).

5. Dispositif selon la revendication 4, caractérisé par le fait que le ressort non linéaire (8) est un ressort magnétique, dont une partie (9) est reliée à l'aile porteuse (1) et l'autre partie (10) à la charge (2) extérieure, les parties (9, 10) étant disposées l'une par rapport à l'autre en équilibre instable, le dispositif (11) de rappel servant à rétablir la situation d'équilibre instable.

6. Dispositif selon les revendications 4 et 5, caractérisé par le fait que les deux pièces (9, 10) du ressort magnétique sont chacune constituées de plusieurs barreaux aimantés (13 ou 14) placés les uns derrière les autres dans la direction du déplacement, qui sont séparés les uns des autres par des entretoises (15 ou 16) en fer doux, les axes magnétiques (17) des barreaux (13 ou 14) étant situés parallèlement à la direction de déplacement et leurs pôles disposés de sorte que dans chaque cas deux barreaux aimantés successifs (13, 13 ou 14, 14) soient en contact avec l'entretoise (15 ou 16) en fer doux, les pôles de même nom étant tournés l'un vers l'autre.

7. Dispositif selon la revendication 4, caractérisé par le fait que la valeur de la dureté négative du ressort non linéaire (8) est à peine plus faible que la valeur de la dureté positive du ressort linéaire (7).

8. Dispositif selon les revendications 4 et 5, caractérisé par le fait que le dispositif de rappel (11) se compose d'un moteur pas à pas ou d'une installation hydraulique, qui est reliée à l'aile porteuse (1), rappelle la pièce (9) du ressort magnétique reliée à l'aile porteuse et s'appuie sur l'aile porteuse (1).

9. Dispositif selon la revendication 6, caractérisé par le fait que les barreaux aimantés (13 ou 14) et les entretoises en fer doux (15 ou 16) sont prévus avec un rapport d'épaisseur respective d'environ 3 à 1.

10. Dispositif selon les revendications 4 et 5 caractérisé par le fait que les deux pièces (9, 10) du ressort magnétique sont prévues avec des barreaux aimantés (13 ou 14) et des entretoises en fer doux (15 ou 16) disposés concentriquement en anneau et que l'axe de symétrie (20) concentrique est disposé dans la direction de déplacement.

Fig. 1

Frequenz

SP

DP

Geschwindigkeit

Fig.2

1  3  4  6  5

2

Fig.3

1  3  7  8  11

10  9  2

Fig. 4

Fig. 5

Fig. 6

Fig. 7

Fig. 8

Fig. 9